# EUROPÄISCHE PATENTANMELDUNG

(11) **EP 1 762 367 A2**
(43) Veröffentlichungstag der Anmeldung: **14.03.2007**
(21) Anmeldenummer: 06450120.8
(22) Anmeldetag: 31.08.2006
(51) Int. Cl.: B29C 49/42

(54) **Verfahren und Vorrichtung zur Übergabe von rohrförmigen, thermoplastischen Vorformlingen in einer Streckblasmaschine**

(30) Priorität: 09.09.2005 AT 14762005
(71) Anmelder: KOSME Gesellschaft mbH, 2601 Sollenau (AT)
(72) Erfinder: Jeremic, Dejan, 1160 Wien (AT)
(74) Vertreter: Miksovsky, Alexander

(57) **Zusammenfassung**

Bei einem Verfahren und einer Vorrichtung zur Übergabe von rohrförmigen, thermoplastischen Vorformlingen, welche in einer Heizeinrichtung (2) erwärmt werden und in wenigstens einer nachfolgenden Blas- bzw. Streckblaseinrichtung (10) zur Herstellung von Hohlkörpern, insbesondere PET-Behältern bzw. -Flaschen, einer mechanischen Verformung unter Einbringung eines Gases unter Druck in die Vorformlinge auf die endgültige Form der herzustellenden Hohlkörper aufgeweitet werden, ist vorgesehen, daß wenigstens zwei nebeneinander aus der Heizeinrichtung (2) austretende und in dieser erwärmte Vorformlinge (1) gleichzeitig durch eine Aufnahmevorrichtung (5) aufgenommen werden und daß der Abstand zwischen den benachbarten Vorformlingen (1) vor dem Einbringen in die nachgeschaltete Blas- bzw. Streckblaseinrichtung (10) auf den Abstand zwischen benachbarten Formelementen (9) in der Blas- bzw. Streckblaseinrichtung (10) vergrößert wird, wodurch eine sichere und zuverlässige Führung und Übergabe der erwärmten Vorformlinge (1) zwischen einzelnen Stationen einer Streckblasmaschine vorgenommen werden kann.

## Beschreibung

Die vorliegende Erfindung bezieht sich auf ein Verfahren zur Übergabe von rohrförmigen, thermoplastischen Vorformlingen, welche in einer Heizeinrichtung erwärmt werden und in wenigstens einer nachfolgenden Blas- bzw. Streckblaseinrichtung zur Herstellung von Hohlkörpern, insbesondere PET-Behältern bzw. -Flaschen, einer mechanischen Verformung unter Einbringung eines Gases unter Druck in die Vorformlinge auf die endgültige Form der herzustellenden Hohlkörper aufgeweitet werden. Die Erfindung bezieht sich weiters auf eine Vorrichtung zur Übergabe von rohrförmigen, thermoplastischen Vorformlingen, welche in einer Heizeinrichtung erwärmbar sind und in wenigstens einer nachfolgenden Blas- bzw. Streckblaseinrichtung zur Herstellung von Hohlkörpern, insbesondere PET-Behältern bzw. -Flaschen, einer mechanischen Verformung unter Einbringung eines Gases unter Druck in die Vorformlinge auf die endgültige Form der herzustellenden Hohlkörper aufweitbar sind.

Derartige Verfahren und Vorrichtungen sind in unterschiedlichen Ausführungsformen bekannt, wobei rohrförmige, thermoplastische Vorformlinge durch eine Förder- bzw. Zufuhreinrichtung zu einer Heizeinrichtung zugeführt und in dieser erwärmt werden, worauf nachfolgend nach Einbringen in entsprechende Formelemente in einer nachgeschalteten Blas- bzw. Streckblaseinrichtung die Vorformlinge auf eine gewünschte Form verformt werden, um Hohlkörper, beispielsweise PET-Behälter bzw. -Flaschen herzustellen. Eine derartige Vorrichtung zur Herstellung von Hohlkörpern aus rohrförmigen, thermoplastischen Vorformlingen ist beispielsweise der AT-U 520 zu entnehmen, gemäß welcher ein Transport der Vorformlinge durch spezielle scherenartige Klemmelemente zumindest im Bereich der Heizeinrichtung vorgesehen ist. Nach Verlassen der Heizeinrichtung werden die erwärmten Vorformlinge entlang einer Führung der nachgeschalteten Blas- bzw. Streckblaseinrichtung zugeführt, wobei die Zufuhr im wesentlichen durch ein Vorrücken bzw. Vorschieben der Vorformlinge durch nachfolgende, aus der Heizeinrichtung ausgebrachte, erwärmte Vorformlinge und somit nicht kontrolliert erfolgt.

Im Zusammenhang mit derartigen, üblicherweise als Linearmaschinen bezeichneten Blas- bzw. Streckblasmaschinen ist weiters bekannt, zur Erhöhung der Stückzahlen eine Mehrzahl von Formelementen in der nachgeschalteten Blas- bzw. Streckblaseinrichtung im wesentlichen nebeneinander vorzusehen und gleichzeitig die darin jeweils aufgenommenen Vorformlinge insbesondere durch Einbringung eines Gases unter Druck auf die gewünschte Form der herzustellenden Hohlkörper zu verformen, so daß spezielle Belademechanismen der einzelnen Formelemente mit Vorformlingen aus dem von der Heizeinrichtung bereitgestellten Strom an erwärmten Vorformlingen vorgesehen sind.

Für einen Übergang von erwärmten Vorformlingen aus einer Heizeinrichtung ist darüber hinaus beispielsweise der DE-C 195 29 969 eine Blasmaschine zu entnehmen, daß die Heiz- und die Blasstrecke jeweils geradlinig verlaufende und über Umlenkorgane geführte Transportorgane für die Vorformlinge aufweist, wobei darauf abgezielt wird, unabhängig von der Anzahl der in der Heizstrecke befindlichen Vorformlinge jeweils mehrere Vorformlinge in mehrere, insbesondere benachbart nebeneinander angeordnete Formelemente der nachgeschalteten Blas- bzw. Streckblaseinrichtung zuzuführen. Bei der bekannten Ausführungsform werden hiebei über Umlenkräder geführte Kettenantriebe sowohl auf der Heizstrecke als auch im Bereich der Blasstrecke vorgesehen, so daß ein überaus hoher, konstruktiver Aufwand bei dieser bekannten Ausführungsform erforderlich ist.

Die vorliegende Erfindung zielt darauf ab, ausgehend von einem Verfahren und einer Vorrichtung der eingangs genannten Art die obengenannten Probleme zu beseitigen und insbesondere zu ermöglichen, daß beginnend vom Austritt der erwärmten Vorformlinge aus der Heizeinrichtung bzw. Heizstrecke die Vorformlinge kontrolliert bzw. gesteuert geführt und der nachfolgenden Blas- bzw. Streckblaseinrichtung bzw. darin vorgesehenen Formelementen zugeführt werden, wobei ergänzend darauf abgezielt wird, jeweils gleichzeitig eine Mehrzahl von insbesondere benachbarten Formelementen der nachgeschalteten Blas- bzw. Streckblaseinrichtung mit erwärmten Vorformlingen zu beschicken.

Zur Lösung dieser Aufgaben ist ein Verfahren der eingangs genanten Art im wesentlichen dadurch gekennzeichnet, daß wenigstens zwei nebeneinander aus der Heizeinrichtung austretende und in dieser erwärmte Vorformlinge gleichzeitig durch eine Aufnahmevorrichtung aufgenommen werden und daß der Abstand zwischen den benachbarten Vorformlingen vor dem Einbringen in die nachgeschaltete Blas- bzw. Streckblaseinrichtung auf den Abstand zwischen benachbarten Formelementen in der Blas- bzw. Streckblaseinrichtung vergrößert wird. Dadurch, daß erfindungsgemäß wenigstens zwei nebeneinander aus der Heizeinrichtung austretende, erwärmte Vorformlinge gleichzeitig durch eine Aufnahmevorrichtung aufgenommen werden, kann ein zuverlässiger und sicherer Abtransport bzw. eine sichere Entnahme jeweils einer Mehrzahl von Vorformlingen aus der Heizeinrichtung vorgenommen werden. In weiterer Folge erfolgt vor dem Einbringen der Vorformlinge ein Vergrößern des Abstands der Vorformlinge gegenüber dem Abstand der Vorformlinge in der Heizeinrichtung auf den Abstand der Formelemente in der nachgeschalteten Blas- bzw. Streckblaseinrichtung, so daß im Gegensatz zum bekannten Stand der Technik die Vorformlinge während des gesamten Transportwegs zwischen dem Austritt aus der Heizeinrichtung und dem Eintritt in die Formelemente der nachgeschalteten Blas- bzw. Streckblaseinrichtung sicher und kontrolliert geführt werden. Weiters wird der für den Transport vom Austritt aus der Heizeinrichtung zum Eintritt in die nachgeschaltete Blas- bzw. Streckblaseinrichtung erforderliche Weg sowie Zeitaufwand genutzt, um definiert den Abstand zwischen wenigstens zwei benachbarten und aus der Heizeinrichtung gleichzeitig aufgenommenen Vorformlingen auf den Abstand der nachgeschalteten Blas- bzw. Streckblaseinrichtung und den darin aufgenommenen Formelementen bzw. Blasformen einzustellen.

Für eine sichere Halterung und zuverlässige Führung der erwärmten Vorformlinge auf dem Transportweg zwischen der Heizeinrichtung und der Blas- bzw. Streckblaseinrichtung wird gemäß einer bevorzugten Ausführungsform vorgesehen, daß die erwärmten Vorformlinge in der Aufnahmeeinrichtung im wesentlichen formschlüssig aufgenommen werden. Eine derartige formschlüssige Aufnahme stellt einen zuverlässigen Transport sowie eine zuverlässige Positionierung insbesondere in den Formelementen der nachgeschalteten Blas- bzw. Streckblaseinrichtung sicher.

Für eine automatisierte und rasche Aufnahme der erwärmten Vorformlinge aus der Heizeinrichtung wird gemäß einer weiters bevorzugten Ausführungsform vorgesehen, daß die Bewegung der Aufnahmeeinrichtung mit der Bewegung der Vorformlinge am Austritt aus der Heizeinrichtung synchronisiert wird und Greifeinrichtungen der Aufnahmeeinrichtung zum Ergreifen der Vorformlinge im wesentlichen normal auf die Bewegungsrichtung der Vorformlinge in der Heizeinrichtung für ein Ergreifen der Vorformlinge bewegt werden, worauf die ergriffenen Vorformlinge durch eine im wesentlichen parallel zur Längsachse der Vorformlinge und insbesondere nach unten gerichtete Bewegung von jeweils einer Halterung für einen Vorformling in der Heizeinrichtung entfernt bzw. abgezogen werden. Eine derartige Synchronisierung der Bewegung der Aufnahmeeinrichtung sowie daran vorgesehener Greifeinrichtungen mit der Bewegung der beispielsweise von einem Kettenelement gebildeten Transportvorrichtung durch die Heizeinrichtung, welche um entsprechende Umlenkräder bzw. -rollen geführt ist und eine Vielzahl von Halterungen für die zu erwärmenden Vorformlinge aufweist, läßt sich in einfacher Weise bewerkstelligen. Die erfindungsgemäße Bewegung der Greifeinrichtungen zur Aufnahme und zum insbesondere formschlüssigen Ergreifen der Vorformlinge sowie zum nachfolgenden Abziehen der Vorformlinge von den Halterungen der Heizeinrichtung läßt sich ebenfalls in einfacher Weise entsprechend automatisieren, so daß mit kurzen Taktzeiten die Übergabe der erwärmten Vorformlinge zwischen der Heizeinrichtung und der nachgeschalteten Blas- bzw. Streckblaseinrichtung vorgenommen werden kann.

Während es prinzipiell möglich ist, unmittelbar nach Aufnahme der erwärmten Vorformlinge am Austritt der Heizeinrichtung deren gegenseitigen Abstand auf den Abstand der Formelemente in der nachgeschalteten Blas- bzw. Streckblaseinrichtung zu vergrößern, könnte dies insbesondere bei größeren Transportwegen bzw. -abständen zwischen der Heizeinrichtung und der nachgeschalteten Blas- bzw. Streckblaseinrichtung zu einem relativ hohen Zeitaufwand und somit zu einer Verringerung von Taktzeiten und somit Produktionsgeschwindigkeiten führen. In diesem Zusammenhang ist gemäß einer weiters bevorzugten Ausführungsform vorgesehen, daß die Vergrößerung des Abstands zwischen benachbarten, aus der Heizeinrichtung entnommenen Vorformlingen in einer von der Aufnahmeinrichtung getrennten Übertragungseinrichtung zum Einbringen der Vorformlinge in die nachgeschaltete Blas- bzw. Streckblaseinrichtung vorgenommen wird. Es erfolgt somit erfindungsgemäß eine Entnahme der erwärmten Vorformlinge aus der Heizeinrichtung durch eine erste bzw. Aufnahmeeinrichtung und eine Übergabe an eine getrennte, nachgeschaltete Übertragungseinrichtung, in welcher eine Vergrößerung des Abstands zwischen benachbarten Vorformlingen vor dem Einbringen in die Formelemente der nachgeschalteten Blas- bzw. Streckblaseinrichtung erfolgt, so daß die Taktzeiten durch eine Verkürzung der Wege der einzelnen, zwischen der Heizeinrichtung und der Blas- bzw. Streckblaseinrichtung vorgesehenen Transporteinrichtungen verkürzt wird und somit die Produktionsgeschwindigkeit erhöht werden kann.

Wie oben bereits angeführt, ist bereits in früheren Streckblasmaschinen zur Erhöhung der Produktionsrate vorgeschlagen worden, eine Mehrzahl von Formelementen gleichzeitig mit Vorformlingen zum nachfolgenden Herstellen von Hohlkörpern durch Einbringen eines Gases unter Druck zu beladen. In diesem Zusammenhang wird darüber hinaus erfindungsgemäß vorgeschlagen, daß eine der Anzahl von Formelementen in der nachgeschalteten Blas- bzw. Streckblaseinrichtung entsprechende Anzahl von erwärmten Vorformlingen gleichzeitig von der Heizeinrichtung aufgenommen wird, wie dies einer weiters bevorzugten Ausführungsform entspricht. Es wird hiedurch sichergestellt, daß jeweils mit einem Transportvorgang zwischen der Heizeinrichtung sowie der nachgeschalteten Blas- bzw. Streckblaseinrichtung die jeweils erforderliche Anzahl von Vorformlingen übergeben wird.

Zur Erzielung entsprechend hoher Produktionsgeschwindigkeiten wird in diesem Zusammenhang gemäß einer weiters bevorzugten Ausführungsform vorgeschlagen, daß gleichzeitig vier benachbarte Vorformlinge oder ein Vielfaches davon aus der Heizeinrichtung durch jeweils eine getrennte Aufnahmeeinrichtung entnommen werden.

Zur Lösung der eingangs genannten Aufgaben ist darüber hinaus eine Vorrichtung der eingangs genannten Art im wesentlichen gekennzeichnet durch wenigstens eine Vorrichtung zur gleichzeitigen Aufnahme von wenigstens zwei nebeneinander aus der Heizeinrichtung austretenden und in dieser erwärmten Vorformlingen sowie zur Vergrößerung des Abstands zwischen den benachbarten Vorformlingen vor dem Einbringen in die nachgeschaltete Blas- bzw. Streckblaseinrichtung auf den Abstand zwischen benachbarten Formelementen in der Blas- bzw. Streckblaseinrichtung. Es läßt sich somit eine sichere und kontrollierte Übergabe der erwärmten Vorformlinge zwischen der Heizeinrichtung und den Formelementen der nachgeschalteten Blas- bzw. Streckblaseinrichtung unter Berücksichtigung der in den einzelnen Maschinenelementen vorgesehenen, unterschiedlichen, relativen Abstände zwischen benachbarten Vorformlingen erzielen.

Für einen besonders zuverlässigen und leicht steuerbaren Antrieb der Aufnahmevorrichtung ist gemäß einer weiters bevorzugten Ausführungsform vorgesehen, daß ein Linearantrieb für die Vorrichtung zur Aufnahme der Vorformlinge aus der Heizeinrichtung zum Synchronisieren der Bewegung der Aufnahmeeinrichtung mit der Bewegung der Vorformlinge am Ausgang der Heizeinrichtung vorgesehen ist.

Zur zuverlässigen Aufnahme von erwärmten Vorformlingen am Austritt aus der Heizeinrichtung ist gemäß einer weiters bevorzugten Ausführungsform vorgesehen, daß die Vorrichtung eine der Anzahl der aufzunehmenden Vorformlinge entsprechende Anzahl von Greifeinrichtungen aufweist, welche jeweils einen aufzunehmenden Vorformling im wesentlichen formschlüssig, insbesondere im Bereich eines Stützrings des Vorformlings, wenigstens teilweise umgreifen.

Für ein sicheres Umgreifen der Vorformlinge und somit einen kontrollierten bzw. gesteuerten Transport zwischen der Heizeinrichtung und der nachgeschalteten Blas- bzw. Streckblaseinrichtung ist darüber hinaus bevorzugt vorgesehen, daß jede Greifvorrichtung von einem plattenförmigen Element gebildet ist, welches eine den Außenumfang des aufzunehmenden Vorformlings übersteigende Aufnahmeöffnung aufweist, in welcher ein den Außenumfang des Vorformlings teilweise umgebendes Halteelement, insbesondere Federelement, angeordnet ist. Eine derartige Greifvorrichtung läßt sich einfach und exakt auf die Abmessungen der jeweils aufzunehmenden Vorformlinge herstellen und auch an der Aufnahmeeinrichtung festlegen bzw. in diese integrieren und zuverlässig bewegen.

Für eine einfache und sichere sowie rasche Abnahme der erwärmten Vorformlinge von der Heizeinrichtung während der synchronen Bewegung der Aufnahmeeinrichtung sowie der Heizeinrichtung ist darüber hinaus vorgesehen, daß die Greifeinrichtungen zur Aufnahme der Vorformlinge in einer zur Bewegungsrichtung der Vorformlinge in der Heizeinrichtung normalen Richtung sowie in einer zur Längsachse der Vorformlinge in der Heizeinrichtung parallelen Richtung, insbesondere nach unten, zum Entnehmen der Vorformlinge von Halterungen in der Heizeinrichtung bewegbar sind, wie dies einer weiters bevorzugten Ausführungsform entspricht.

Wie oben bereits angedeutet, können insbesondere zur Verringerung der Taktzeiten sowie einer Unterteilung der Bewegungsvorgänge der erwärmten Vorformlinge zwischen der Heizeinrichtung sowie der nachgeschalteten Blas- bzw. Streckblaseinrichtung entsprechend aufeinander abgestimmte, mehrere Transportvorrichtungen vorgesehen sein, wobei in diesem Zusammenhang gemäß einer weiters bevorzugten Ausführungsform vorgeschlagen wird, daß eine von der Vorrichtung zur Aufnahme der Vorformlinge aus der Heizeinrichtung getrennte Vorrichtung zum Vergrößern des Abstands zwischen benachbarten Vorformlingen und zum Einbringen in die nachgeschaltete Blas- bzw. Streckblaseinrichtung vorgesehen ist. Es läßt sich somit eine entsprechend rasche und zuverlässige Entnahme der erwärmten Vorformlinge von der Heizeinrichtung durch die mit den Greifeinrichtungen versehene Aufnahmeeinrichtung vornehmen, während eine Vergrößerung des Abstands zwischen benachbarten, erwärmten Vorformlingen und ein Einbringen in die nachgeschaltete Blas- bzw. Streckblaseinrichtung durch die getrennte Vorrichtung zum Vergrößern des Abstands zwischen benachbarten Vorformlingen und zum Einbringen derselben in die nachgeschaltete Blas- bzw. Streckblaseinrichtung durchgeführt wird.

Zur Abstimmung der Taktzyklen in der nachgeschalteten Blas- bzw. Streckblaseinrichtung mit den gleichzeitig von der Heizeinrichtung entnommenen, erwärmten Vorformlingen wird darüber hinaus gemäß einer weiters bevorzugten Ausführungsform vorgeschlagen, daß die Vorrichtung zur Aufnahme der Vorformlinge aus der Heizeinrichtung und/oder zum Aufweiten des Abstands zwischen benachbarten Vorformlingen eine Anzahl von Greifeinrichtungen umfaßt, welche der Anzahl von benachbarten Formelementen in der nachgeschalteten Blas- bzw. Streckblaseinrichtung entspricht.

Für eine konstruktiv einfache Vergrößerung des Abstands zwischen benachbarten Vorformlingen vor einem Einbringen in Formelemente der nachgeschalteten Blas- bzw. Streckblaseinrichtung wird darüber hinaus vorgeschlagen, daß die Greifeinrichtungen der getrennten Vorrichtung zum Vergrößern des Abstands der benachbarten Vorformlinge vor dem Einbringen in die nachgeschaltete Blas- bzw. Streckblaseinrichtung entlang einer im wesentlichen linearen Führung durch einen scherenartigen Gelenkhebelmechanismus bewegbar sind, wie dies einer weiters bevorzugten Ausführungsform der erfindungsgemäßen Vorrichtung entspricht. Ein derartiger Gelenkhebelmechanismus läßt sich exakt an die zu erzielenden Abstände anpassen, welche von den erwärmten Vorformlingen vor dem Einbringen in die Formelemente einzunehmen sind, und ermöglicht auch eine konstruktiv einfache und zuverlässig steuerbare Ausbildung.

Wie mehrfach ausgeführt, ist eine kontrollierte und gesteuerte Übergabe der erwärmten Vorformlinge zwischen der Heizeinrichtung sowie der nachgeschalteten Blas- bzw. Streckblaseinrichtung insbesondere zur Erzielung kurzer Taktzeiten und somit hoher Produktionsgeschwindigkeiten wesentlich. Im Bereich der Übergabe zwischen der Aufnahme bzw. Vorrichtung zur Aufnahme von wenigstens zwei nebeneinander liegenden Vorformlingen aus der Heizeinrichtung und der nachgeschalteten Vorrichtung zur Vergrößerung des Abstands und zum Einbringen in die Formelemente wird gemäß einer weiters bevorzugten Ausführungsform vorgeschlagen, daß eine Übergabe der aus der Heizeinrichtung entnommenen Vorformlinge in die nachgeschaltete Einrichtung zur Vergrößerung des Abstands zwischen benachbarten Vorformlingen entlang einer durch im wesentlichen parallel zueinander angeordnete Schienen gebildeten Führungseinrichtung erfolgt.

Wie oben bereits angedeutet, läßt sich eine entsprechend hohe Produktionsgeschwindigkeit bei Vorsehen einer gleichzeitigen Entnahme einer entsprechenden Anzahl von Vorformlingen aus der Heizeinrichtung erzielen, wobei in diesem Zusammenhang gemäß einer weiters bevorzugten Ausführungsform vorgeschlagen wird, daß eine Mehrzahl von jeweils eine Mehrzahl von Greifeinrichtungen aufweisenden Aufnahmeeinrichtungen und gegebenenfalls getrennten nachgeschalteten Einrichtungen zum Vergrößern der gegenseitigen Abstände entsprechend der Anzahl von Formelementen in der Blas- bzw. Streckblaseinrichtung vorgesehen ist.

Für eine zuverlässige Steuerung und Synchronisierung der Bewegungen der einzelnen Einrichtungen bzw. Vorrichtungen zur Aufnahme und zum Transport der erwärmten Vorformlinge sowie zum Vergrößern des Abstands derselben ist darüber hinaus vorgesehen, daß eine gemeinsame Regel- bzw. Steuereinrichtung zum Regeln bzw. Steuern der Bewegung der Antriebe der Vorrichtung zur Aufnahme der Vorformlinge aus der Heizeinrichtung und/oder der getrennten Vorrichtung zur Vergrößerung des Abstands zwischen benachbarten Vorformlingen und zur Übergabe in die nachgeschaltete Blas- bzw. Streckblaseinrichtung vorgesehen ist, wie dies einer weiters bevorzugten Ausführungsform der erfindungsgemäßen Vorrichtung entspricht.

Die Erfindung wird nachfolgend anhand von in der beiliegenden Zeichnung schematisch dargestellten Ausführungsbeispielen näher erläutert. In dieser zeigen:
Fig. 1 eine schematische Draufsicht auf eine erste Ausführungsform einer erfindungsgemäßen Vorrichtung zur Durchführung des erfindungsgemäßen Verfahrens;
Fig. 2 ähnlich der Darstellung zu Fig. 1 eine schematische Draufsicht auf eine abgewandelte Ausführungsform einer erfindungsgemäßen Vorrichtung zur Durchführung des erfindungsgemäßen Verfahrens, wobei neben einer Aufnahmeeinrichtung zum Ergreifen der Vorformlinge aus der Heizeinrichtung eine getrennte Vorrichtung zum Aufweiten des Abstands sowie zur Übergabe in die nachgeschaltete Blas- bzw. Streckblaseinrichtung dargestellt ist;
Fig. 3 eine Draufsicht auf eine Greifeinrichtung zum Halten bzw. Ergreifen eines Vorformlings;
Fig. 4 eine Seitenansicht auf die Greifeinrichtung in Richtung des Pfeils IV der Fig. 3;
Fig. 5 einen Schnitt durch die Greifeinrichtung der Fig. 3 und 4 entlang der Linie V-V der Fig. 4;
Fig. 6 eine schematische Teildraufsicht auf eine weitere, abgewandelte Ausführungsform einer erfindungsgemäßen Vorrichtung, wobei zwei nebeneinander liegende Aufnahmeeinrichtungen zur Aufnahme jeweils einer Mehrzahl von Vorformlingen aus einer Heizeinrichtung dargestellt sind;
Fig. 7 in vergrößertem Maßstab eine Teilseitenansicht auf eine in Fig. 6 dargestellte Aufnahmeeinrichtung mit einem in einer Greifeinrichtung gehaltenen Vorformling; und
Fig. 8 eine schematische Bodenansicht einer getrennten Vorrichtung zum Aufweiten des Abstands benachbarter Vorformlinge und zum Einbringen in die nachgeschaltete Blas- bzw. Streckblaseinrichtung.

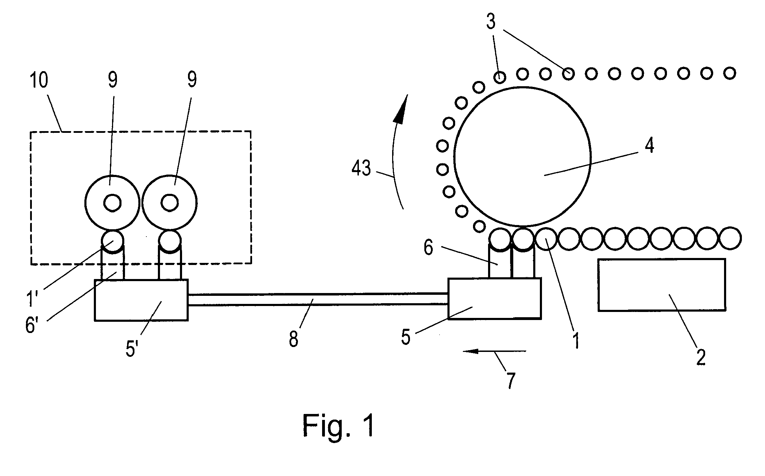

In Fig. 1 ist schematisch eine Teilansicht einer Vorrichtung zur Herstellung von Hohlkörpern, insbesondere PET-Flaschen bzw. -Behältern, dargestellt, wobei eine Mehrzahl von Vorformlingen 1 durch eine schematisch mit 2 angedeutete Heizeinrichtung erwärmt wird, wobei die Vorformlinge 1 bzw. schematisch mit 3 angedeutete Halterungen durch eine nicht näher dargestellte Kette transportiert werden, die um ein mit 4 bezeichnetes Umlenkrad umgelenkt wird.

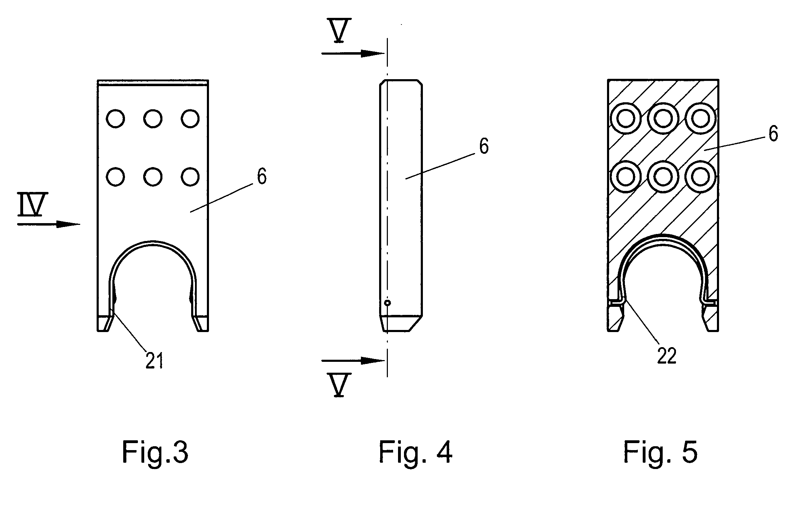

Im Bereich des Austritts aus der Heizeinrichtung bzw. nachgeschaltet der mit 2 bezeichneten Heizeinrichtung ist in Fig. 1 schematisch mit 5 eine Vorrichtung zur Aufnahme von zwei Vorformlingen 1 angedeutet, wobei eine Aufnahme über schematisch mit 6 angedeutete Greifeinrichtungen erfolgt, welche beispielsweise unter Bezugnahme auf Fig. 3 bis 5 im Detail näher erörtert werden.

Nach einer Aufnahme von zwei benachbarten Vorformlingen 1 durch eine synchronisierte Bewegung der Aufnahmeeinrichtung 5 entlang des Pfeils 7 mit der Bewegung der sich in Richtung des Pfeils 43 bewegenden Kette, welche die Vorformlinge 1 trägt, erfolgt eine Bewegung der Aufnahmeeinrichtung 5 entlang einer mit 8 angedeuteten, linearen Führung zu der in Fig. 1 mit 5' bezeichneten Position. In der mit 5' bezeichneten Position weisen die Greifeinrichtungen 6' sowie die daran gelagerten Vorformlinge 1' einen gegenüber dem Abstand in der Heizeinrichtung 2 bzw. nach Verlassen derselben vergrößerten Abstand auf, welcher auf den Abstand zwischen schematisch mit 9 angedeuteten Formelementen in einer nachgeschalteten Blas- bzw. Streckblaseinrichtung 10 abgestimmt ist.

An dieser Stelle erfolgt eine Übergabe der Vorformlinge 1' in die Formelemente 9, worauf nach Einbringung eines Gases unter Druck in die erwärmten Vorformlinge 1' eine Verformung derselben entsprechend der Form der Formelemente 9 zur Herstellung der Hohlkörper, insbesondere von PET-Behältern bzw. -Flaschen, erfolgt.

Da sowohl der Vorgang eines Erwärmens der Vorformlinge 1 im Bereich der Heizeinrichtung 2 als auch der nachfolgende Blasvorgang in der nachgeschalteten Blas- bzw. Streckblaseinrichtung 10 unter Einbringung eines Gases unter Druck für sich gesehen bekannt sind, kann eine detaillierte Beschreibung hiefür entfallen.

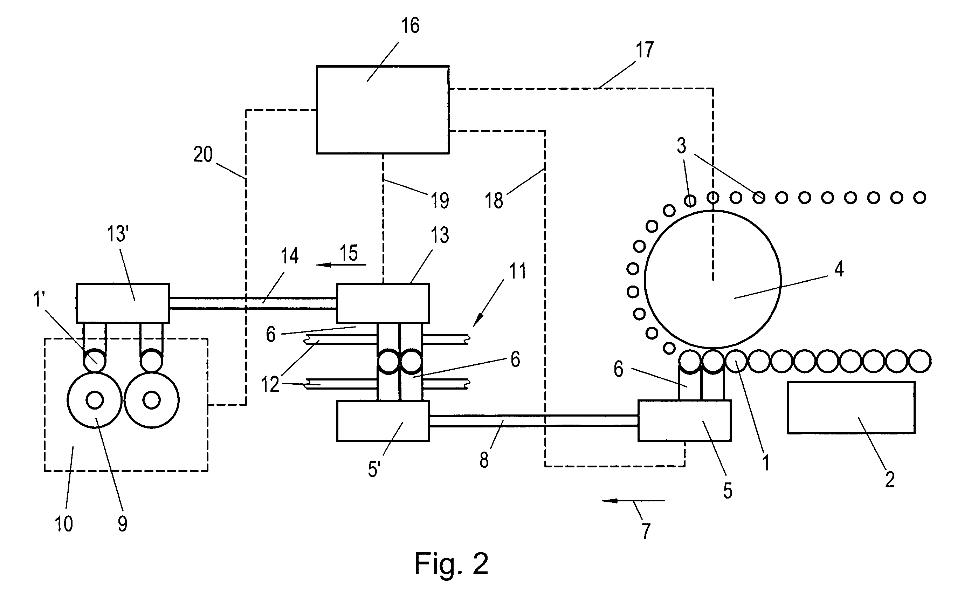

Bei der in Fig. 2 schematisch dargestellten, abgewandelten Ausführungsform ist wiederum ein Umlenkrad 4 für Halterungen 3 der Vorformlinge 1 dargestellt, welche in einer wiederum mit 2 schematisch angedeuteten Heizeinrichtung erwärmt wurden.

Am bzw. nach Austritt aus der Heizeinrichtung 2 erfolgt über eine wiederum mit 5 bezeichnete Aufnahmeeinrichtung über Greifeinrichtungen 6 eine gleichzeitige Aufnahme von mehreren benachbarten Vorformlingen 1, worauf entlang der Führung 8 eine Verschiebung der Aufnahmeeinrichtung 5 entlang des Pfeils 7 erfolgt.

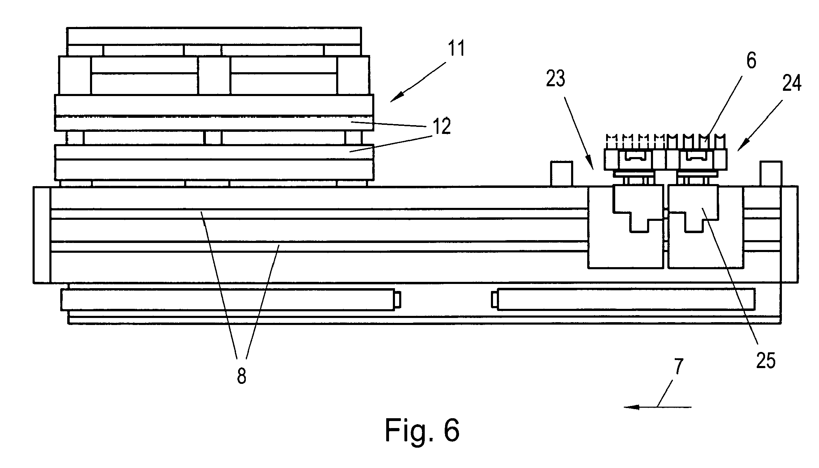

Im Gegensatz zu der in Fig. 1 dargestellten Ausführungsform erfolgt in der Aufnahmeeinrichtung 5 keine Vergrößerung des gegenseitigen Abstands benachbarter Vorformlinge 1, wie dies an der Position 5' angedeutet ist. Im Bereich einer allgemein mit 11 bezeichneten Übergabe, welche von zueinander parallelen Schienen 12 gebildet wird, wie dies nachfolgend noch insbesondere unter Bezugnahme auf Fig. 6 erörtert werden wird, erfolgt eine Übergabe der Vorformlinge 1 an eine nachgeschaltete Übertragungseinrichtung 13, welche ebenfalls entlang einer linearen Führung 14 entsprechend dem Pfeil 15 verschiebbar ist. Wie dies in Fig. 2 ersichtlich ist, erfolgt in dieser Ausführungsform eine Vergrößerung des gegenseitigen Abstands der einzelnen Vorformlinge 1 in der Übertragungsvorrichtung 13 während der Bewegung bis zu der als 13' bezeichneten, verlagerten bzw. verschobenen Position, in welcher ähnlich wie bei der Ausführungsform gemäß Fig. 1 wiederum eine Übergabe der Vorformlinge 1' in wiederum mit 9 bezeichnete Formelemente der nachgeschalteten und mit 10 bezeichneten Blas- bzw. Streckblaseinrichtung erfolgt.

Es kann somit bei der in Fig. 2 dargestellten Ausführungsform eine Erhöhung der Taktraten erfolgen, da die zwischen der Heizeinrichtung 2 bzw. dem Austritt derselben und der nachgeschalteten Blas- bzw. Streckblaseinrichtung 10 zurückzulegende Wege auf zwei Übertragungs- bzw. Transporteinrichtungen 5 und 13 aufgeteilt sind, deren Bewegungsvorgang jeweils im wesentlichen gleichzeitig erfolgen kann.

Zur Steuerung der im Detail noch näher zu erläuternden Antriebe der einzelnen Einrichtungen 5 bzw. 13, zur Synchronisierung mit der Transportgeschwindigkeit der erwärmten Vorformlinge 1 in der vorgeschalteten Heizeinrichtung 2 sowie im Bereich der Übergabe zwischen den Einrichtungen 5 und 13, zum Aufweiten des gegenseitigen Abstands der Vorformlinge 1 relativ zueinander sowie zur Bewegung der Vorrichtung 13 zu der nachgeschalteten Blas- bzw. Streckblaseinrichtung 10 ist eine schematisch mit 16 angedeutete, gemeinsame Regel- bzw. Steuereinrichtung vorgesehen, welche über mit 17, 18, 19 und 20 bezeichnete Regel- bzw. Steuerleitungen mit den einzelnen, bewegten Vorrichtungen 4, 5 und 13 bzw. der nachgeschalteten Blas- bzw. Streckblaseinrichtung 10 gekoppelt ist.

In Fig. 3 bis 5 ist im Detail eine Ausführungsform einer wiederum mit 6 bezeichneten Greifvorrichtung dargestellt, welche eine sichere Aufnahme jeweils eines erwärmten Vorformlings 1 ermöglicht. Wie insbesondere aus der Darstellung gemäß Fig. 3 und 5 ersichtlich, weist die Greifeinrichtung 6 eine Aufnahmeöffnung 21 auf, welche den lichten Durchmesser eines zu ergreifenden Vorformlings 1 übersteigt, wobei im Bereich der Aufnahmeöffnung 21 ein Halterungselement, insbesondere Federelement 22, gelagert ist, welches während des Transportvorgangs der einzelnen Einrichtungen eine sichere und kontrollierte bzw. gesteuerte Bewegung der Vorformlinge 1 zwischen den einzelnen Einrichtungen ermöglicht.

In Fig. 6 ist in einer Detaildarstellung eine gegenüber der Ausführungsform gemäß Fig. 2 geringfügig abgewandelte Aufnahmeeinrichtung dargestellt, wobei ersichtlich ist, daß zwei voneinander getrennte Aufnahmeeinrichtungen 23 und 24 im Bereich der in Fig. 6 nicht näher dargestellten Heizeinrichtung bzw. dem Austritt anordenbar sind. Weiters ist in Fig. 6 angedeutet, daß jede der Aufnahmeeinrichtungen 23 und 24 jeweils vier nebeneinander angeordnete Greifeinrichtungen 6 jeweils zur Aufnahme eines nicht näher dargestellten Vorformlings 1 aufweist.

Die Aufnahmeeinrichtungen 23, 24 sind entlang einer wiederum mit 8 bezeichneten Führung über Linearantriebe bewegbar, wobei ein Antriebselement in Fig. 6 schematisch jeweils mit 25 angedeutet ist.

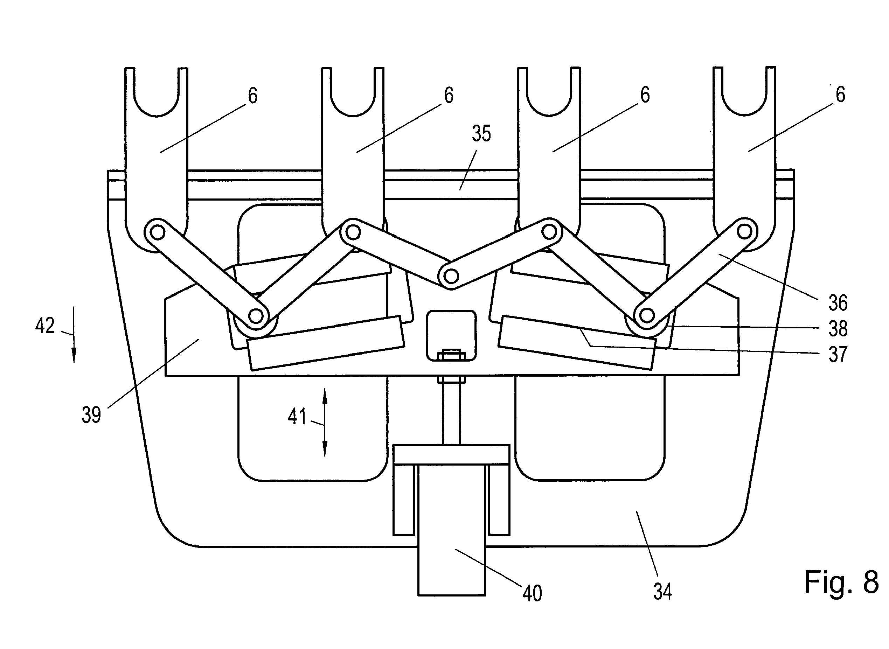

Die durch die Greifeinrichtungen 6 jeweils aufgenommenen Vorformlinge 1 werden im Bereich der wiederum mit 11 bezeichneten Übergabeeinrichtung durch zwei Schienen 12 aufgenommen, worauf in weiterer Folge die Aufnahme durch eine in Fig. 8 im Detail dargestellte Aufnahmeeinrichtung für einen weiteren Transport zu der nachgeschalteten Blas- bzw. Streckblaseinrichtung 10 erfolgt.

Bei der in Fig. 6 dargestellten Ausführungsform ist es somit möglich, gleichzeitig zweimal jeweils vier Vorformlinge am Austritt aus der Heizeinrichtung 2 aufzunehmen, so daß im Bereich der Übergabestation 11 auch zwei Übertragungsvorrichtungen zur Übertragung von jeweils vier Vorformlingen vorgesehen sind, durch welche in weiterer Folge die Vorformlinge 1 zu blockweise angeordneten Formelementen einer nachgeschalteten Blas- bzw. Streckblaseinrichtung 10 zugeführt werden.

Es ist somit ersichtlich, daß in Abhängigkeit von beispielsweise der Form und Größe der in der nachgeschalteten Blas- bzw. Streckblaseinrichtung 10 auszubildenden Hohlkörper eine entsprechende Anzahl von Vorformlingen 1 gleichzeitig durch gegebenenfalls eine Mehrzahl von Aufnahmeeinrichtungen 5 bzw. 23 und 24 entnommen wird und nachfolgend entsprechend den beispielsweise blockweise angeordneten Formelementen 9 der nachgeschalteten Blas- bzw. Streckblaseinrichtung 10 zugeführt wird.

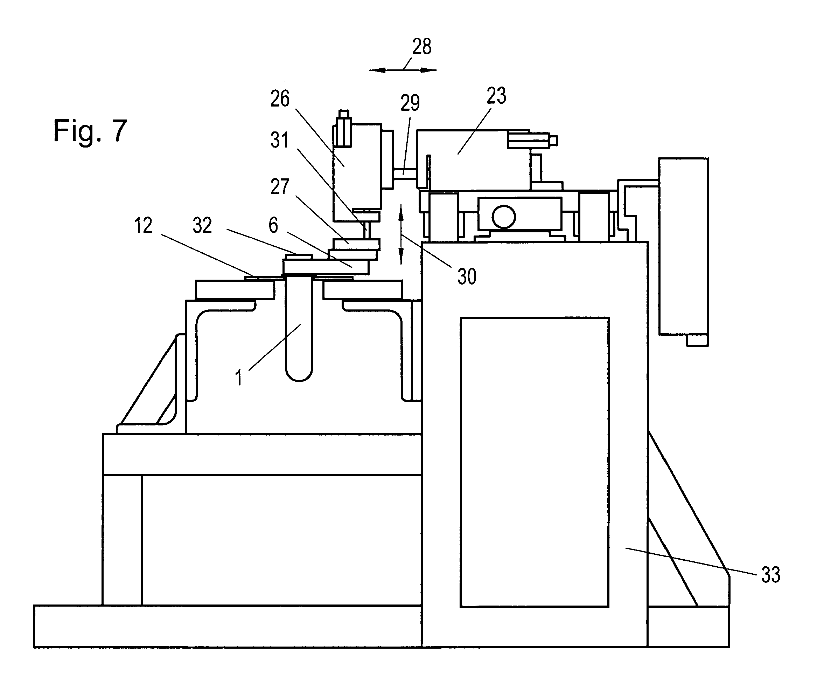

Bei der schematischen Darstellung gemäß Fig. 7 ist angedeutet, daß die an der Aufnahmeeinrichtung 23 angeordneten Greifeinrichtungen 6, wobei ein Vorformling 1 ergriffen im Bereich der Schiene 12 dargestellt ist, über zwischengeschaltete Halterungen 26 und 27 sowohl eine Bewegung entsprechend dem Doppelpfeil 28 beispielsweise über ein Zylinderkolbenaggregat 29 normal auf die Bewegungsrichtung in der vorgeschalteten Heizeinrichtung 2 als auch eine Bewegung entsprechend dem Doppelpfeil 30 beispielsweise wiederum über ein Zylinderkolbenaggregat 31 im wesentlichen parallel zur Längsachse des Vorformlings 1 ermöglichen, so daß beispielsweise ein im Bereich seiner Öffnung 32 aufgenommener Vorformling 1 in einfacher Weise von einer Halterung 3 in der Heizeinrichtung nach einem Ergreifen nach unten abgezogen werden kann.

Nach einer Übergabe der Vorformlinge 1 im Bereich der Schienen 12 erfolgt eine Rückkehr der Aufnahmeeinrichtungen 23 und 24 in den Bereich des Austritts aus der Heizeinrichtung 2, wobei sich die Halterungen 26, 27 und somit die Greifeinrichtungen 6 in den jeweils zurückgezogenen Positionen befinden, so daß nach einer Synchronisierung der Bewegung der Aufnahmeeinrichtung 23 mit der Bewegung der Vorformlinge 1 am Austritt aus der Heizeinrichtung 2 die Greifeinrichtungen 6 entsprechend dem Doppelpfeil 28 ausgefahren werden und durch ein Bewegen nach unten entlang der Längsachse der Vorformlinge 1 jeweils eine entsprechende Anzahl von Vorformlingen 1 von Halterungen 3 aus der Heizeinrichtung 2 abziehen.

Eine Lager- bzw. Supportstruktur sowohl für die Aufnahmeeinrichtung 23 und die entsprechenden Antriebe als auch im Bereich der Übergabeeinrichtung 11 ist allgemein mit 33 bezeichnet.

In Fig. 8 ist in vergrößertem Maßstab eine Bodenansicht einer mit 34 bezeichneten Übertragungsvorrichtung dargestellt, welche ähnlich der in Fig. 2 mit 13 bezeichneten Einrichtung im Bereich der Übergabevorrichtung 11 sowie der Schiene 12 eine Mehrzahl von Vorformlingen 1 entsprechend der Anzahl der Vorformlinge 1, welche durch die Aufnahmeeinrichtung 5 bzw. 23 und 24 von der Heizeinrichtung 2 gleichzeitig abgenommen wurden, aufnimmt und den gegenseitigen Abstand der aufgenommenen Vorformlinge 1 vergrößert, bevor sie einer nachgeschalteten Blas- bzw. Streckblaseinrichtung 10 und insbesondere deren Formelementen 9 zugeführt werden.

Bei der in Fig. 8 dargestellten Ausführungsform ist ersichtlich, daß wiederum vier Greifeinrichtungen 6 vorgesehen sind, so daß eine derartige Übertragungsvorrichtung 34 beispielsweise mit den in Fig. 6 dargestellten Aufnahmeeinrichtungen 23 und 24 zusammenwirkt. In Fig. 8 sind die Greifeinrichtungen 6 mit bereits gegenseitig vergrößertem Abstand entsprechend dem Abstand der Formelemente 9 der nachgeschalteten Blas- bzw. Streckblaseinrichtung 10 dargestellt, wobei ersichtlich ist, daß die Greifeinrichtungen 6, welche entlang einer linearen Führung 35 bewegbar sind, über einen scherenartigen Gelenkmechanismus 36 miteinander gekoppelt sind. Der Gelenkmechanismus 36 weist hiebei in Führungen 37 gelagerte Schwenkrollen 38 auf, welche über einen gemeinsamen Träger 39 beispielsweise über ein Zylinderkolbenaggregat 40 im Sinne des Doppelpfeils 41 bewegbar sind. Bei einem Einziehen des Zylinderkolbenaggregats 40 erfolgt eine Bewegung des Trägers 39 entsprechend dem Pfeil 42, worauf über den Gelenkmechanismus 36 und die schräg verlaufenden Führungen 37 eine Verringerung des Abstands zwischen den einzelnen Greifeinrichtungen 6 auf einen Abstand erfolgt, wie er beispielsweise in den Aufnahmeeinrichtungen 23, 24 vorgesehen ist, welche eine Mehrzahl von Vorformlingen 1 im Bereich der Übergabevorrichtung 11, insbesondere auf den Schienen 12, anordnen.

Wenn eine Mehrzahl von Aufnahmeeinrichtungen verwendet wird, wie dies in Fig. 6 durch die Einrichtungen 23, 24 angedeutet ist, so wird eine entsprechende Anzahl von Übertragungsvorrichtungen 34 ebenfalls zum Einsatz gelangen, so daß gleichzeitig eine Vielzahl von Vorformlingen 1 nachgeschalteten, beispielsweise in Blockform angeordneten Formelementen 9 zur Herstellung von Hohlkörpern zur Verfügung gestellt werden kann.

Es ist unmittelbar einsichtig, daß insbesondere entsprechend der Anzahl von in der nachgeschalteten Blas- bzw. Streckblaseinrichtung 10 gleichzeitig durch ein Einbringen von Gas unter Druck herzustellenden Hohlkörpern, insbesondere PET-Flaschen bzw. -Behältern, sowohl an den Aufnahmeeinrichtungen 5 bzw. 23 und 24 als auch an den nachgeschalteten Vorrichtungen 13 bzw. 34 zum Aufweiten des gegenseitigen Abstands und zum Einbringen der Vorformlinge 1 in die nachgeschaltete Blas- bzw. Streckblaseinrichtung 10 eine entsprechende Anzahl von Greifeinrichtungen 6 zur Aufnahme einer entsprechenden Anzahl von Vorformlingen 1 vorgesehen wird, um eine optimale Verkürzung der Taktzeiten und somit eine Optimierung der Produktionsgeschwindigkeit bzw. Stückzahl zu erzielen.

Anstelle des gezeigten Gelenkmechanismus 36 zum Verändern des Abstands zwischen den einzelnen Greifeinrichtungen 6 und somit der aufgenommenen Vorformlinge 1 können selbstverständlich auch andere entsprechende Verstellantriebe, beispielsweise Schrittmotoren oder dgl., im Bereich der Übertragungsvorrichtung 13 bzw. 34 vorgesehen sein.

Darüber hinaus können abgewandelte Ausführungsformen der Greifeinrichtungen 6, welche gegebenenfalls starr bzw. einstückig mit entsprechenden Halterungen ausgebildet sind, vorgesehen sein, solange sichergestellt ist, daß jeweils ein Vorformling 1 entsprechend zuverlässig insbesondere im Bereich eines Stützrings aufgenommen und zwischen den einzelnen Stationen der Streckblasmaschine transportiert werden kann.

Anstelle der angedeuteten Linearantriebe für die Aufnahmeeinrichtung 5 bzw. 23 und 24 und/oder die Übertragungsvorrichtungen 13 und 34 können andere, bekannte Antriebe, wie beispielsweise Spindelantriebe oder dgl. vorgesehen sein.

## Patentansprüche

1. Verfahren zur Übergabe von rohrförmigen, thermoplastischen Vorformlingen (1), welche in einer Heizeinrichtung (2) erwärmt werden und in wenigstens einer nachfolgenden Blas- bzw. Streckblaseinrichtung (10) zur Herstellung von Hohlkörpern, insbesondere PET-Behältern bzw. -Flaschen, einer mechanischen Verformung unter Einbringung eines Gases unter Druck in die Vorformlinge (1) auf die endgültige Form der herzustellenden Hohlkörper aufgeweitet werden, **dadurch gekennzeichnet, daß** wenigstens zwei nebeneinander aus der Heizeinrichtung (2) austretende und in dieser erwärmte Vorformlinge (1) gleichzeitig durch eine Aufnahmevorrichtung (5, 13, 23, 24, 34) aufgenommen werden und daß der Abstand zwischen den benachbarten Vorformlingen (1) vor dem Einbringen in die nachgeschaltete Blas- bzw. Streckblaseinrichtung (10) auf den Abstand zwischen benachbarten Formelementen (9) in der Blas- bzw. Streckblaseinrichtung (10) vergrößert wird.

2. Verfahren nach Anspruch 1, **dadurch gekennzeichnet, daß** die erwärmten Vorformlinge (1) in der Aufnahmeeinrichtung (5, 13, 23, 24, 34) im wesentlichen formschlüssig aufgenommen werden.

3. Verfahren nach Anspruch 1 oder 2, **dadurch gekennzeichnet, daß** die Bewegung der Aufnahmeeinrichtung (5, 23, 24) mit der Bewegung der Vorformlinge (1) am Austritt aus der Heizeinrichtung (2) synchronisiert wird und Greifeinrichtungen (6) der Aufnahmeeinrichtung zum Ergreifen der Vorformlinge (1) im wesentlichen normal auf die Bewegungsrichtung der Vorformlinge (1) in der Heizeinrichtung (2) für ein Ergreifen der Vorformlinge (1) bewegt werden, worauf die ergriffenen Vorformlinge (1) durch eine im wesentlichen parallel zur Längsachse der Vorformlinge (1) und insbesondere nach unten gerichtete Bewegung von jeweils einer Halterung für einen Vorformling (1) in der Heizeinrichtung (2) entfernt bzw. abgezogen werden.

4. Verfahren nach Anspruch 1, 2 oder 3, **dadurch gekennzeichnet, daß** die Vergrößerung des Abstands zwischen benachbarten, aus der Heizeinrichtung (2) entnommenen Vorformlingen (1) in einer von der Aufnahmeinrichtung (5, 23, 24) getrennten Übertragungseinrichtung (13, 34) zum Einbringen der Vorformlinge (1) in die nachgeschaltete Blas- bzw. Streckblaseinrichtung (10) vorgenommen wird.

5. Verfahren nach einem der Ansprüche 1 bis 4, **dadurch gekennzeichnet, daß** eine der Anzahl von Formelementen (9) in der nachgeschalteten Blas- bzw. Streckblaseinrichtung (10) entsprechende Anzahl von erwärmten Vorformlingen (1) gleichzeitig von der Heizeinrichtung (2) aufgenommen wird.

6. Verfahren nach Anspruch 5, **dadurch gekennzeichnet, daß** gleichzeitig vier benachbarte Vorformlinge (1) oder ein Vielfaches davon aus der Heizeinrichtung (2) durch jeweils eine getrennte Aufnahmeeinrichtung (5, 23, 24) entnommen werden.

7. Vorrichtung zur Übergabe von rohrförmigen, thermoplastischen Vorformlingen (1), welche in einer Heizeinrichtung (2) erwärmbar sind und in wenigstens einer nachfolgenden Blas- bzw. Streckblaseinrichtung (10) zur Herstellung von Hohlkörpern, insbesondere PET-Behältern bzw. -Flaschen, einer mechanischen Verformung unter Einbringung eines Gases unter Druck in die Vorformlinge auf die endgültige Form der herzustellenden Hohlkörper aufweitbar sind, **gekennzeichnet durch** wenigstens eine Vorrichtung (5, 13, 23, 24, 34) zur gleichzeitigen Aufnahme von wenigstens zwei nebeneinander aus der Heizeinrichtung (2) austretenden und in dieser erwärmten Vorformlingen (1) sowie zur Vergrößerung des Abstands zwischen den benachbarten Vorformlingen (1) vor dem Einbringen in die nachgeschaltete Blas- bzw. Streckblaseinrichtung (10) auf den Abstand zwischen benachbarten Formelementen (9) in der Blas- bzw. Streckblaseinrichtung (10).

8. Vorrichtung nach Anspruch 7, **dadurch gekennzeichnet, daß** ein Linearantrieb für die Vorrichtung (5, 23, 24) zur Aufnahme der Vorformlinge (1) aus der Heizeinrichtung (2) zum Synchronisieren der Bewegung der Aufnahmeeinrichtung (5, 23, 24) mit der Bewegung der Vorformlinge (1) am Ausgang der Heizeinrichtung (2) vorgesehen ist.

9. Vorrichtung nach Anspruch 7 oder 8, **dadurch gekennzeichnet, daß** die Vorrichtung (5, 23, 24) eine der Anzahl der aufzunehmenden Vorformlinge (1) entsprechende Anzahl von Greifeinrichtungen (6) aufweist, welche jeweils einen aufzunehmenden Vorformling (1) im wesentlichen formschlüssig, insbesondere im Bereich eines Stützrings des Vorformlings (1), wenigstens teilweise umgreifen.

10. Vorrichtung nach Anspruch 9, **dadurch gekennzeichnet, daß** jede Greifvorrichtung (6) von einem plattenförmigen Element gebildet ist, welches eine den Außenumfang des aufzunehmenden Vorformlings (1) übersteigende Aufnahmeöffnung (21) aufweist, in welcher ein den Außenumfang des Vorformlings teilweise umgebendes Halteelement, insbesondere Federelement (22), angeordnet ist.

11. Vorrichtung nach Anspruch 9 oder 10, **dadurch gekennzeichnet, daß** die Greifeinrichtungen (6) zur Aufnahme der Vorformlinge (1) in einer zur Bewegungsrichtung der Vorformlinge (1) in der Heizeinrichtung (2) normalen Richtung (28) sowie in einer zur Längsachse der Vorformlinge (1) in der Heizeinrichtung (2) parallelen Richtung (30), insbesondere nach unten, zum Entnehmen der Vorformlinge (1) von Halterungen (3) in der Heizeinrichtung (2) bewegbar sind.

12. Vorrichtung nach einem der Ansprüche 7 bis 11, **dadurch gekennzeichnet, daß** eine von der Vorrichtung (5, 23, 24) zur Aufnahme der Vorformlinge (1) aus der Heizeinrichtung (2) getrennte Vorrichtung (13, 34) zum Vergrößern des Abstands zwischen benachbarten Vorformlingen (1) und zum Einbringen in die nachgeschaltete Blas- bzw. Streckblaseinrichtung (10) vorgesehen ist.

13. Vorrichtung nach einem der Ansprüche 7 bis 12, **dadurch gekennzeichnet, daß** die Vorrichtung (5, 23, 24) zur Aufnahme der Vorformlinge (1) aus der Heizeinrichtung (2) und/oder zum Aufweiten des Abstands zwischen benachbarten Vorformlingen (1) eine Anzahl von Greifeinrichtungen (6) umfaßt, welche der Anzahl von benachbarten Formelementen (9) in der nachgeschalteten Blas- bzw. Streckblaseinrichtung (10) entspricht.

14. Vorrichtung nach Anspruch 12 oder 13, **dadurch gekennzeichnet, daß** die Greifeinrichtungen (6) der getrennten Vorrichtung (34) zum Vergrößern des Abstands der benachbarten Vorformlinge (1) vor dem Einbringen in die nachgeschaltete Blas- bzw. Streckblaseinrichtung (10) entlang einer im wesentlichen linearen Führung (35) durch einen scherenartigen Gelenkhebelmechanismus (36) bewegbar sind.

15. Vorrichtung nach einem der Ansprüche 12 bis 14, **dadurch gekennzeichnet, daß** eine Übergabe der aus der Heizeinrichtung (2) entnommenen Vorformlinge (1) in die nachgeschaltete Einrichtung (34) zur Vergrößerung des Abstands zwischen benachbarten Vorformlingen (1) entlang einer durch im wesentlichen parallel zueinander angeordnete Schienen gebildeten Führungseinrichtung (12) erfolgt.

16. Vorrichtung nach einem der Ansprüche 7 bis 15, **dadurch gekennzeichnet, daß** eine Mehrzahl von jeweils eine Mehrzahl von Greifeinrichtungen (6) aufweisenden Aufnahmeeinrichtungen (23, 24) und gegebenenfalls getrennten nachgeschalteten Einrichtungen (34) zum Vergrößern der gegenseitigen Abstände entsprechend der Anzahl von Formelementen (9) in der Blas- bzw. Streckblaseinrichtung (10) vorgesehen ist.

17. Vorrichtung nach einem der Ansprüche 7 bis 16, **dadurch gekennzeichnet, daß** eine gemeinsame Regel- bzw. Steuereinrichtung (16) zum Regeln bzw. Steuern der Bewegung der Antriebe der Vorrichtung (5, 23, 24) zur Aufnahme der Vorformlinge (1) aus der Heizeinrichtung (2) und/oder der getrennten Vorrichtung (13, 34) zur Vergrößerung des Abstands zwischen benachbarten Vorformlingen (1) und zur Übergabe in die nachgeschaltete Blas- bzw. Streckblaseinrichtung (10) vorgesehen ist.
